# EUROPEAN PATENT SPECIFICATION

(11) **EP 0 957 331 B1**
(45) Date of publication and mention of the grant of the patent: **23.07.2008**
(21) Application number: 99201389.6
(22) Date of filing: 04.05.1999
(51) Int. Cl.: G01B 3/56, B24B 3/36

(54) **Angle gauge for grinding sharp-edged tools**
Winkelmesslehre für scharfgeschliffene Werkzeuge
Capteur d'angles pour des outils à arêtes aigües

(30) Priority: 13.05.1998 SE 9801670
(43) Date of publication of application: 17.11.1999
(73) Proprietor: TJ Utveckling AB, 711 30 Lindesberg (SE)
(72) Inventor: Jansson, Torgny, S-711 23 Lindesberg (SE)
(74) Representative: Onn, Thorsten

(56) References cited:
- EP-A- 0 776 731
- GB-A- 2 278 305
- US-A- 5 172 484

## Description

The present invention concerns an angle gauge used when grinding the lip of sharp-edged tools according to the introduction to claim 1.

It is of great importance that the lip of sharp-edged tools of various types, such as knives, chisels, etc., has the correct cutting angle in order for the tool to function in the correct way and with good control of its movement without the lip being damaged. The correct cutting angle naturally depends on the quality of the steel, the type of tool, the hardness of the wood and how hard one works with the tool. Experience of these variables determines the angle that is correct for each occasion.

A practical way of setting a certain cutting angle, chosen because of the reasons mentioned above, for grinding the tool has not been available. When grinding tools by hand today, there is only one type of template provided with notches or angular-shaped grooves of different angles in which the lip of the tool can be inserted to determine or estimate the cutting angle.

With the help of the invention, as is evident from the characteristics sections of the claims, an angle gauge has been devised with which it is possible to rig the tool at the grinding wheel and its holder for grinding to the correct, chosen cutting angle, and with which it is possible to even measure cutting angles found on the tool. With the help of the invention, the adjustment of the tool at the grinding wheel holder to attain the correct cutting angle can be made independent of the diameter of the grinding wheel within, of course, reasonable limits.

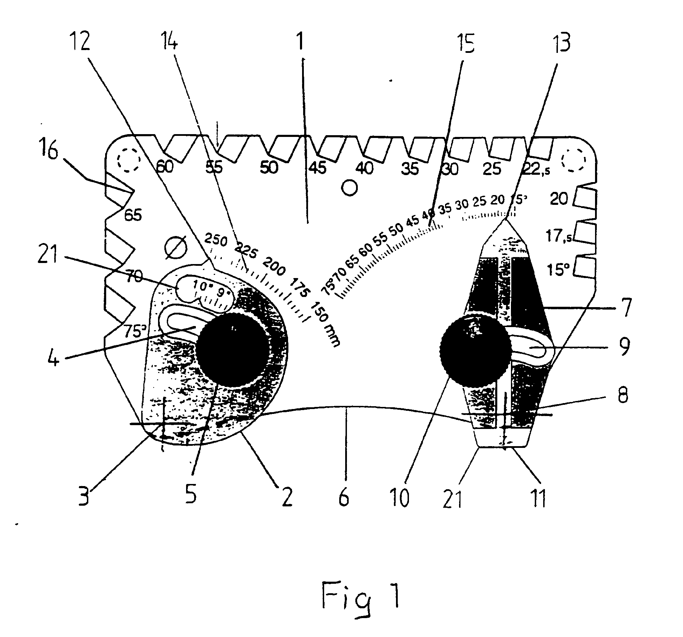

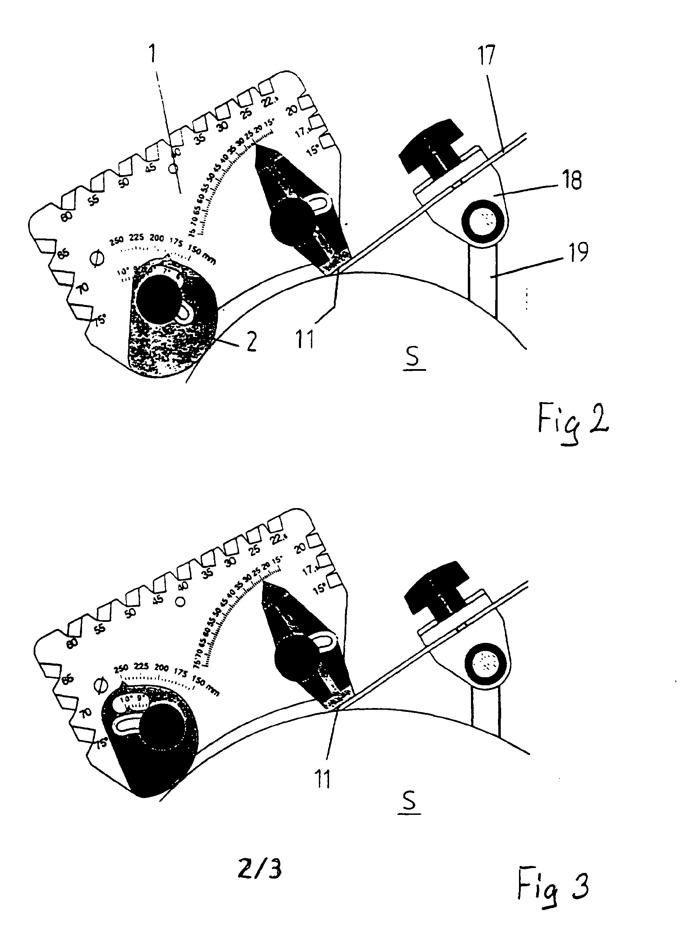

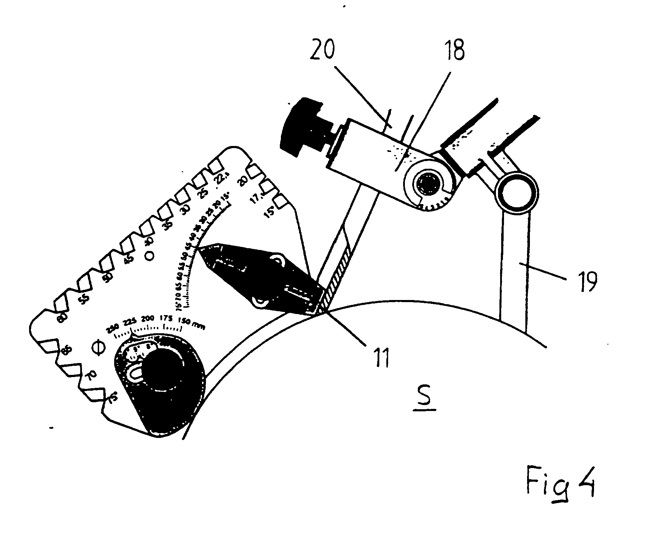

The invention will be described in greater detail with reference to the drawings where **Fig. 1** shows the angle gauge according to the invention seen from the side, **Fig. 2** shows a tool rigged for grinding with a certain diameter of grinding wheel and **Fig. 3** shows a situation equivalent to that shown in Fig. 2 but with a different diameter of grinding wheel. **Fig. 4** shows the set-up during the grinding of a gouge.

The angle gauge according to the invention includes a frame 1 with a certain longitudinal extension and a thickness of 3-5 millimetres, for example. At one end of the frame, a first device in the form of a cam plate 2 is arranged. Cam plate 2 is arranged to rotate around point 3 on the frame 1. In addition, cam plate 2 is provided with a slot 4 with its centre of curvature at 3. A locking screw 5 extends through the slot 4, with whose help the cam plate can be locked in position against the frame 1 at different angles of rotation. The edge of the frame 1, which is pointed towards the grinding wheel when the invention is in use, is convex and the cam plate 2 extends out from this edge 6 of the frame 1. A second device in the form of an elongated body 7 is arranged at the other end of the frame 1. The elongated body 7 is arranged to be rotatable and attached to the frame 1 around point 8. Body 7 also has a slot 9 with its centre of curvature at 8. A locking screw 10 extends through the slot 8, with whose help the elongated body 7 can be locked in position against the frame 1 at different angles of rotation. The elongated body 7 extends out from the edge 6 of frame 1 and has a flat edge 11 at its outer end.

In the example shown in Fig. 1, the cam plate 2 and the elongated body 7 are provided with sharp indicating points 12 and 13 respectively and the frame is provided with scales 14 and 15 respectively. Scale 14 for cam plate 2 is graduated from 150 to 250 millimetres and refers to the diameter of the grinding wheel in question. Scale 15 gives the intended cutting angle.

In addition, frame 1 is provided with a number of sharp pointed notches 16 with different bottom angles for easy checking of the cutting angle of a tool.

Fig. 2 thus shows the grinding of a steel tool 17 clamped in a jig 18 held by a universal support 19. The cam plate 2 is adjusted for grinding with a grinding wheel S with a diameter of 180 millimetres and the body 7 that determines the angle of the cutting angle that is to be ground is adjusted to 25°. Fig. 3 shows grinding with a 25° cutting angle but with a grinding wheel of 250 millimetres diameter.

Fig. 4 shows the equivalent grinding of a gouge 20 to an angle of 45° with a grinding wheel of 225 millimetres diameter. Here, the jig 18 is of another type than that shown in Figs. 2 and 3 and the gouge is tilted around its longitudinal axis during the grinding.

By allowing the possibility of always being able to compensate for the diameter of the grinding wheel with the help of cam plate 2, the correct cutting angle can always be set with the help of the device 7. The frame 1 with the devices 2 and 7 is brought to abut the grinding wheel S, as shown, with the diameter of the grinding wheel set on cam plate 2 and with the cutting angle set on body 7. The corner edge 21 (Fig. 1) of the flat edge 11 of this body that lies closest to cam plate 2 thereby abuts the grinding wheel S. The tool 17 (20) is now rigged in the grinding wheel support via the jig 18 so that its upper side coincides with the flat edge 11 in the manner shown in Figs. 2-4. Following this, the angle gauge is removed and the grinding begins. The cutting angle can be checked easily afterwards with the help of the pre-set angle gauge.

As is shown in the figures, the cam plate is provided with a window 22 in which a scale graduated in inches is visible.

## Claims

1. Angle gauge used when grinding the lip of sharp-edged tools including a frame (1) with a longitudinal extension **characterised in that** an adjustable first device (2) is arranged on the frame at one end of the frame that during measurement is intended to be supported against the periphery of the grinding wheel (S) and that through adjustment varies the distance between the said one end and the periphery of the grinding wheel, and that an adjustable rotatable second device (7) is arranged at the other end of the frame and provided with a flat edge (11) that extends towards the periphery of the grinding wheel and that during measurement abuts the periphery of the grinding wheel with the corner edge that faces the first device in such a manner that the flat edge (11) forms an angle with the periphery of the grinding wheel where this angle defines the cutting angle.

2. Angle gauge according to claim 1 **characterised in that** the first device (2) comprises a rotatable cam plate that can be locked against the frame (1).

3. Angle gauge according to claim 1 or 2 **characterised in that** the second device (7) has the form of an elongated body that can be locked against the frame and that has one end that extends outwards from the frame to form the flat edge (11).

4. Angle gauge according to any of the previous claims **characterised in that** the first device (2) and the second device (7) are designed with sharp indicator points (12, 13) that interact with scales (14, 15) applied on the frame.

## Patentansprüche

1. Winkellehre zur Verwendung beim Schleifen der Schneide von scharfkantigen Werkzeugen, die einem Rahmen (1) mit einer Längsausdehnung aufweist, **dadurch gekennzeichnet, dass** eine verstellbare erste Vorrichtung (2) an einem Ende des Rahmens auf dem Rahmen angebracht ist, die dazu vorgesehen ist, während der Messung auf dem Umfang des Schleifrads (S) aufzuliegen, und die durch Verstellen den Abstand zwischen dem genannten einen Ende und dem Umfang des Schleifrads verändert, und dass eine verstellbare, drehbare zweite Vorrichtung (7) am anderen Ende des Rahmens angebracht ist und eine flache Kante (11) aufweist, die zum Umfang des Schleifrads weist und die während der Messung mit der der ersten Vorrichtung zugewandten Eckkante am Umfang des Schleifrads derart anliegt, dass die flache Kante (11) einen Winkel mit dem Umfang des Schleifrads bildet, wobei dieser Winkel den Schneidwinkel definiert.

2. Winkellehre nach Anspruch 1, **dadurch gekennzeichnet, dass** die erste Vorrichtung (2) eine drehbare Nockenscheibe aufweist, die gegenüber dem Rahmen (1) arretierbar ist.

3. Winkellehre nach Anspruch 1 oder 2, **dadurch gekennzeichnet, dass** die zweite Vorrichtung (7) die Form eines länglichen Körpers aufweist, der gegenüber dem Rahmen arretierbar ist und ein Ende aufweist, das vom Rahmen nach aussen weist und die flache Kante (11) bildet.

4. Winkellehre nach einem der vorstehenden Ansprüche, **dadurch gekennzeichnet, dass** die erste Vorrichtung (2) und die zweite Vorrichtung (7) mit spitzen Zeigern (12, 13) ausgeführt sind, die mit auf dem Rahmen angebrachten Skalen (14, 15) zusammenwirken.

## Revendications

1. Jauge d'angle utilisée lors de l'affûtage de la lèvre d'outils à arête vive, comprenant un cadre (1) ayant une étendue longitudinale, **caractérisée en ce qu'**un premier dispositif (2) ajustable est agencé sur le cadre à une extrémité du cadre, lequel est destiné à être soutenu pendant la mesure par la périphérie de la meule (S), et qui par son réglage varie la distance entre ladite extrémité et la périphérie de la meule, et qu'un deuxième dispositif (7) ajustable rotatif est agencé à l'autre extrémité du cadre et pourvu d'une arête plate (11) qui s'étend vers la périphérie de la meule et qui pendant la mesure s'appuie sur la périphérie de la meule avec le coin de l'arête en regard du premier dispositif de telle manière que l'arête plate (11) forme un angle avec la périphérie de la meule, cet angle définissant l'angle de coupe.

2. Jauge d'angle selon la revendication 1, **caractérisée en ce que** le premier dispositif (2) comprend une came disque rotative qui peut être bloquée sur le cadre (1).

3. Jauge d'angle selon la revendication 1 ou 2, **caractérisée en ce que** le deuxième dispositif (7) a la forme d'un corps allongé qui peut être bloqué sur le cadre et qui présente une extrémité qui s'étend du cadre vers l'extérieur pour former l'arête plate (11).

4. Jauge d'angle selon l'une quelconque des revendications précédentes, **caractérisée en ce que** le premier dispositif (2) et le deuxième dispositif (7) sont réalisés avec des aiguilles indicatrices (12, 13) qui interagissent avec des cadrans (14, 15) appliqués sur le cadre.
